# EUROPEAN PATENT SPECIFICATION

(11) **EP 3 949 681 B1**
(45) Date of publication and mention of the grant of the patent: **17.06.2026**
(21) Application number: 20717972.2
(22) Date of filing: 27.03.2020
(51) Int. Cl.: H04W 84/04, H04W 36/08, H04B 7/155, H04B 7/26

(54) **IAB NODE RELEASE PROCEDURE**
VERFAHREN ZUR FREIGABE EINES IAB-KNOTENS
PROCÉDURE DE LIBÉRATION DE NOEUD IAB

(30) Priority: 28.03.2019 US 201962825586 P
(43) Date of publication of application: 09.02.2022
(73) Proprietor: Telefonaktiebolaget LM Ericsson (publ), 164 83 Stockholm (SE)
(72) Inventor: MUHAMMAD, Ajmal, 191 41 Sollentuna (SE); TEYEB, Oumer, 171 44 Solna (SE); MILDH, Gunnar, 192 55 Sollentuna (SE)
(74) Representative: Ericsson
(86) International application number: PCT/IB2020/052963
(87) International publication number: WO 2020/194271

(56) References cited:
- WO-A1-2019/032997
- ZTE: "Discussion on IAB topology adaptation", vol. RAN WG2, no. Montreal, Canada; 20180702 - 20180706, 22 June 2018 (2018-06-22), XP051529581, Retrieved from the Internet <URL:http://www.3gpp.org/ftp/tsg%5Fran/WG3%5FIu/TSGR3%5FAHGs/R3%2DAH%2D1807/Docs/R3%2D183688%2Ezip> [retrieved on 20180622]

## Description

### CROSS REFERENCE TO RELATED APPLICATIONS

This application claims the benefit of U.S. Provisional Application No. 62/825,586 filed on March 28, 2019.

### TECHNICAL FIELD

The present disclosure generally relates to wireless communications and wireless communication networks.

### INTRODUCTION

Standardization bodies such as Third Generation Partnership Project (3GPP) are studying potential solutions for efficient operation of integrated access backhaul (IAB) and wireless access backhaul in new radio (NR) networks.

IAB strives to reuse existing functions and interfaces defined for access. In particular, Mobile-Termination (MT), gNB Distributed Unit (gNB-DU), gNB Central Unit (gNB-CU), User Plane Function (UPF), Access and Mobility Management Function (AMF) and Session Management Function (SMF) as well as the corresponding interfaces NR Uu (between MT and gNB), F1, NG, X2 and N4 are used as baseline for the IAB architectures. Modifications or enhancements to these functions and interfaces for the support of IAB will be explained in the context of the architecture discussion. Additional functionality such as multi-hop forwarding is included in the architecture discussion as it is necessary for the understanding of IAB operation and since certain aspects may require standardization.

The Mobile-Termination (MT) function has been defined as a component of the Mobile Equipment. In the context of this study, MT is referred to as a function residing on an IAB-node that terminates the radio interface layers of the backhaul Uu interface toward the IAB-donor or other IAB-nodes. An IAB-node is a radio access network (RAN) node that supports wireless access to user equipment (UEs) and wirelessly backhauls the access traffic. An IAB-donor is a RAN node which provides UE's interface to the core network and wireless backhauling functionality to IAB-nodes.

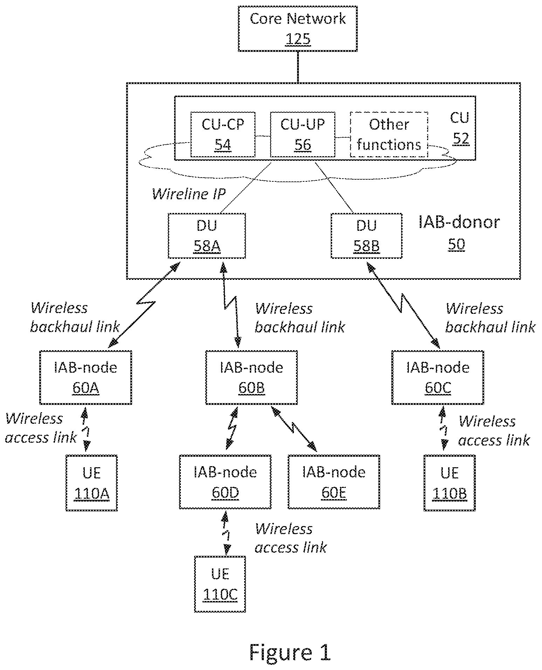

Figure 1 shows a reference diagram for IAB in standalone mode (according to 3GPP TR 38.874 v0.7.0), which contains one IAB-donor 50 and multiple IAB-nodes 60. The IAB-donor 50 is treated as a single logical node that comprises a set of functions such as gNB-DU, gNB-CU-CP (control plane), gNB-CU-UP (user plane) and potentially other functions. In a deployment, the IAB-donor 50 can be split according to these functions (e.g. donor CU 52 including CU-CP 54 and CU-UP 56 and donor DU(s) 58), which can all be either collocated or non-collocated as allowed by 3GPP NG-RAN architecture. IAB related aspects may arise when such split is exercised. Also, some of the functions presently associated with the IAB-donor 50 may eventually be moved outside of the donor in case it becomes evident that they do not perform IAB-specific tasks.

A number of potential architectures to implement IAB have been identified in TR 38.874. These are illustrated in Figures 2a-2e. After analyzing the differences between these options during the study item phase of IAB specifications, 3GPP has concluded to standardize Architecture 2a for release 16. The proposed user plane (UP) and control plane (CP) protocol stacks are illustrated in Figures 3 and 4.

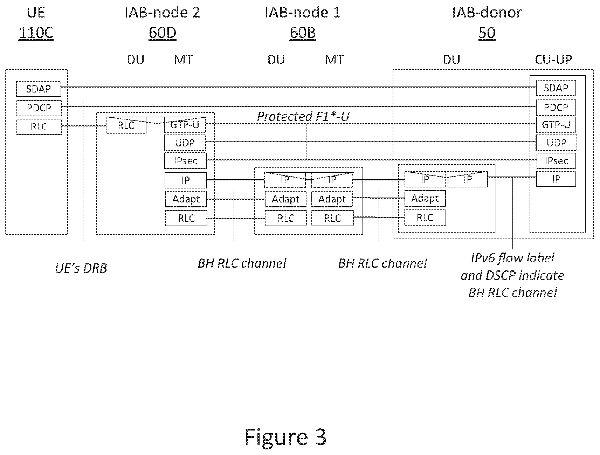

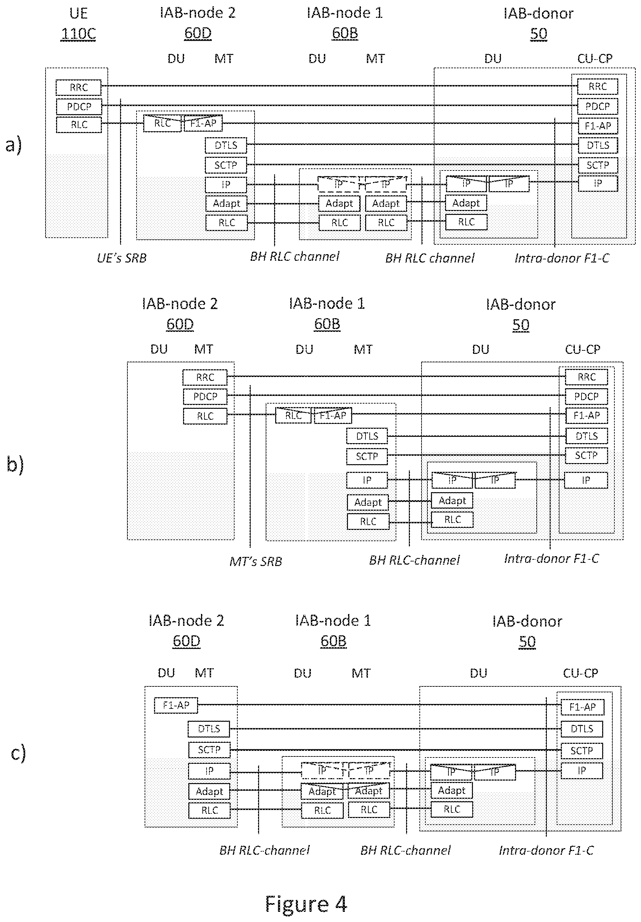

As shown in Figure 3 and 4, the chosen protocol stacks use the CU-DU split specification according to Release 15, where the full F1-U (GTP-U/UDP/IP) is terminated at the IAB node (like a normal DU) and the full F1-C (F1-AP/SCTP/IP) is also terminated at the IAB node (like a normal DU). In the above cases, Network Domain Security (NDS) has been employed to protect both UP and CP traffic (IPsec in the case of UP, and DTLS in the case of CP). IPsec could also be used for the CP protection instead of DTLS.

One commonality between the CP and UP protocol stacks is that a new layer, called adaptation layer, has been introduced in the intermediate IAB nodes and the IAB-donor, which is used for routing of packets to the appropriate downstream/upstream node and also mapping the UE bearer data to the proper backhaul RLC channel (and also between backhaul RLC channels in intermediate IAB nodes) to satisfy the end to end QoS requirements of bearers.

Some notes regarding the operation of the transmitter and receiver side follows:

### PDCP

The PDCP entity receives PDCP SDUs from higher layers and these SDUs are assigned a Sequence Number and delivered to lower layers (i.e. RLC). The discardTimer is also started at the time a PDCP SDU is received. When the discardTimer expires, the PDCP SDU is discarded and a discard indication is sent to lower layers. RLC, when possible, will then discard the RLC SDU.

On the receiver side, the PDCP entity starts the t-reordering when it receives packets in out-of-order. When the t-reordering expires, the PDCP entity updates the variable RX_DELIV which indicates the value of the first PDCP SDU not delivered to the upper layers, i.e. it indicates the lower side of the receiving window.

### RLC

On the transmitter side, when an RLC SDU is received from higher layers a SN is associated to it. The transmitter may set the poll bit to request the receiver side to transmit a status report. When this is done, the t-pollRetransmit is started. Upon expiration of this timer, the transmitter will set again the poll bit and may further retransmit those PDUs which were awaiting to be acknowledged.

The receiver, on the other hand, will start the t-reassembly when RLC PDUs are not received in sequence. The function is similar as the t-reordering in PDCP. The timer is started when there is a SN gap, i.e. a RLC PDU is missing. When t-reassembly expires, for AM, the receiver will transmit a status report to trigger a retransmission in the transmitter side.

### MAC

When the UE has data to be transmitted, it will request for a grant by means of the SR or BSR.

### IAB-node Integration

IAB-node integration includes the following phases:
1. The IAB-node authenticates with the operator's network and establishes IP connectivity to reach OAM functionality for OAM configuration:
   - This phase includes discovery and selection of a serving node, which can be an IAB-donor or another IAB-node. The IAB-node may retrieve this information, e.g. from OAM or via RAN signaling such as OSI or RRC.
   - This phase further includes setting up connectivity to other RAN nodes and CN.
   - This phase involves the MT function on the IAB-node.
2. The IAB-node's DU, gNB, or UPF are set up together with all interfaces to other RAN-nodes and CN. This phase must be performed before the IAB-node can start serving UEs or before further IAB-nodes can connect:
   - For architectures 2a and 2b, this phase involves setup of the IAB-node's DU and the Fl-establishment to the IAB-donor's CU-CP and CU-UP.
   - For architecture 2c, this phase involves setup of the IAB-node's gNB and UPF as well as integration into the PDU-session forwarding layer across the wireless backhaul.
   - This phase includes the IAB-node's integration into topology and route management.
3. The IAB-node provides service to UEs or to other integrated IAB-nodes:
   - UEs will not be able to distinguish access to the IAB-node from access to gNBs.

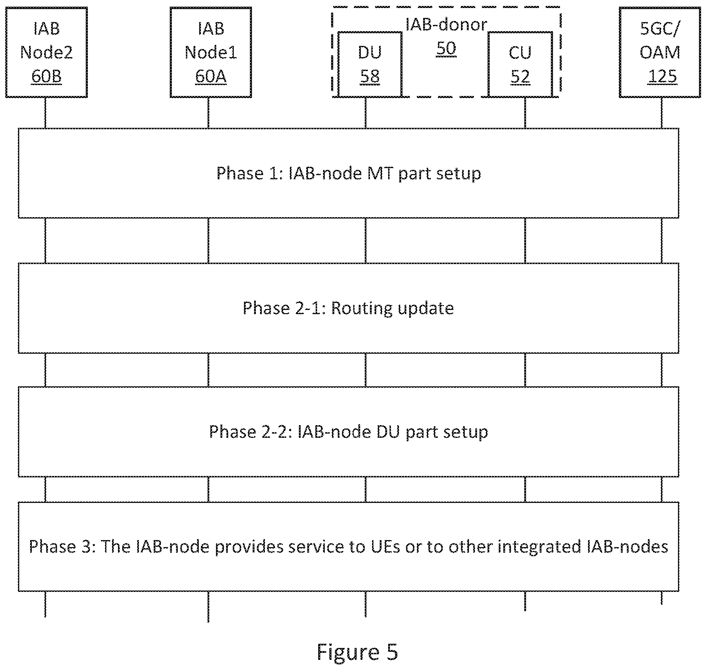

Figure 5 is a flow chart illustrating an example SA-based IAB integration procedure.

IAB-node's integration procedure phase 1: IAB-node MT part setup. In this phase, IAB-node MT part connects the network as a normal UE, such as IAB-node MT part performs RRC connection setup procedure between donor-CU, authentication and PDU session establishment between OAM, IAB-node MT part related context and bearer configuration in RAN side, etc. For CP alternative 2 and alternative 4 for 2a and 2b, the intermediate IAB-node DU part encapsulates the related RRC messages of the IAB-node MT part in F1-AP messages.

IAB-node's integration procedure phase 2-1: Routing update. In this phase, the routing information are updated for all related IAB-nodes due to the setup of IAB-node.

IAB-node's integration procedure phase 2-2: IAB-node DU part setup. For CP alternative 2 and alternative 4 for 2a and 2b, the IAB-node's DU part performs F1-AP setup procedure.

IAB-node's integration procedure phase 3: The IAB-node provides service to UEs or to other integrated IAB-nodes.

NSA-based IAB-node integration has the following phases:
Phase 1: IAB-node MT part setup. In this phase, IAB-node MT part performs the connection setup procedure and authentication via LTE RRC signaling to the LTE network. The eNB then configures the IAB-node MT part with an NR measurement configuration in order to perform discovery, measurement, and measurement reporting of candidate parent IAB-nodes to the eNB. The IAB-node MT part then connects to the parent IAB-node's DU and CU via the EN-DC SN addition procedure.
Phase 2-1: Routing update. In this phase, routing information is updated on the IAB-node's parent and its ancestor nodes to establish an NR backhaul path between IAB-node and IAB-donor.
Phase 2-2: IAB-node DU part setup. The IAB-node's DU performs F1-AP setup procedure. It can use the same transport over the NR backhaul as in SA mode. Alternatively, it may leverage SRBs over LTE and the X2 connection between eNB and CU for the transport of F1-AP as outlined in section 8.3.4. Both alternatives can be further studied, considering robustness and overhead of transmissions on the LTE or NR carrier(s).
Phase 3: The IAB-node DU provides service to UEs or to other integrated IAB-nodes via NR and the IAB-node MT maintains connectivity with the LTE eNB and parent IAB-node.

WO 2019/032997 A1 discloses that a base station central unit transmits a first message to a base station distributed unit. The first message comprises first configuration parameters of a wireless device. The base station central unit receives a second message from the base station distributed unit indicating acknowledgement of the first message. The second message comprises second configuration parameters based on the first configuration parameters. The base station central unit transmits to the wireless device via the base station distributed unit, a third message comprising the second configuration parameters. The base station central unit receives from the wireless device via the base station distributed unit, a fourth message confirming at least one of the second configuration parameters. The base station central unit transmits to the base station distributed unit, a fifth message indicating that the wireless device successfully performed a reconfiguration procedure based on the second configuration parameters.

ZTE: "Discussion on IAB topology adaptation", 3GPP Draft; R3-183688, discloses an IAB topology adaptation scheme. In particular, three options for backhaul link migration are discussed.

### SUMMARY

It is an object of the present disclosure to obviate or mitigate at least one disadvantage of the prior art.

The invention is defined by the subject-matter of the independent claims. Advantageous embodiments are indicated in the dependent claims. There are provided solutions for releasing context(s) and/or connection(s) associated with a network node.

In a first aspect of the present disclosure there is provided a method according to claim 1.

In some embodiments, the first IAB-donor CU can determine that the identified IAB-node DU function is served by a second IAB-donor CU.

In some embodiments, responsive to determining that a UE is served by the IAB-node DU, a handover or release of the UE is initiated. Initiating the handover or release of the UE can include transmitting a Xn handover request message to the second IAB-donor CU. Initiating the handover or release of the UE can include transmitting a RRC release message to the second IAB-donor CU.

In some embodiments, responsive to determining that a child IAB-node is served by the IAB-node DU, a handover or release of the child IAB-node is initiated. Initiating the handover or release of the child IAB-node can include transmitting a Xn handover request message to the second IAB-donor CU. Initiating the handover or release of the child IAB-node can include transmitting a RRC release message to the second IAB-donor CU.

In some embodiments, initiating the release of the F1 interface resource can include releasing a non-UE associated context associated with the IAB-node DU. In some embodiments, initiating the release of the F1 interface resource can include transmitting a message to the second IAB-donor CU.

In some embodiments, the first IAB-donor CU can transmit a UE/MT context release message to at least one parent IAB-node of the IAB-node. In some embodiments, the parent IAB-node can be an IAB-donor DU. In a second aspect, there is provided an Integrated Access Backhaul, IAB, donor central unit, CU, according to claim 9.

The various aspects and embodiments described herein can be combined alternatively, optionally and/or in addition to one another.

Other aspects and features of the present disclosure will become apparent to those ordinarily skilled in the art upon review of the following description of specific embodiments in conjunction with the accompanying figures.

### BRIEF DESCRIPTION OF THE DRAWINGS

Embodiments of the present disclosure will now be described, by way of example only, with reference to the attached Figures, wherein:
Figure 1 is a reference diagram for IAB architectures;

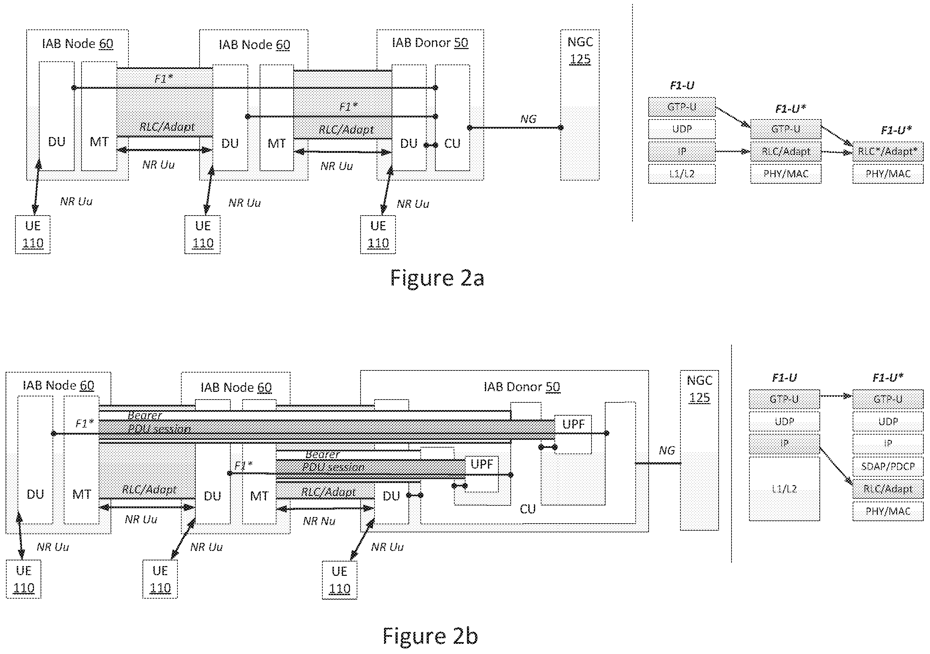

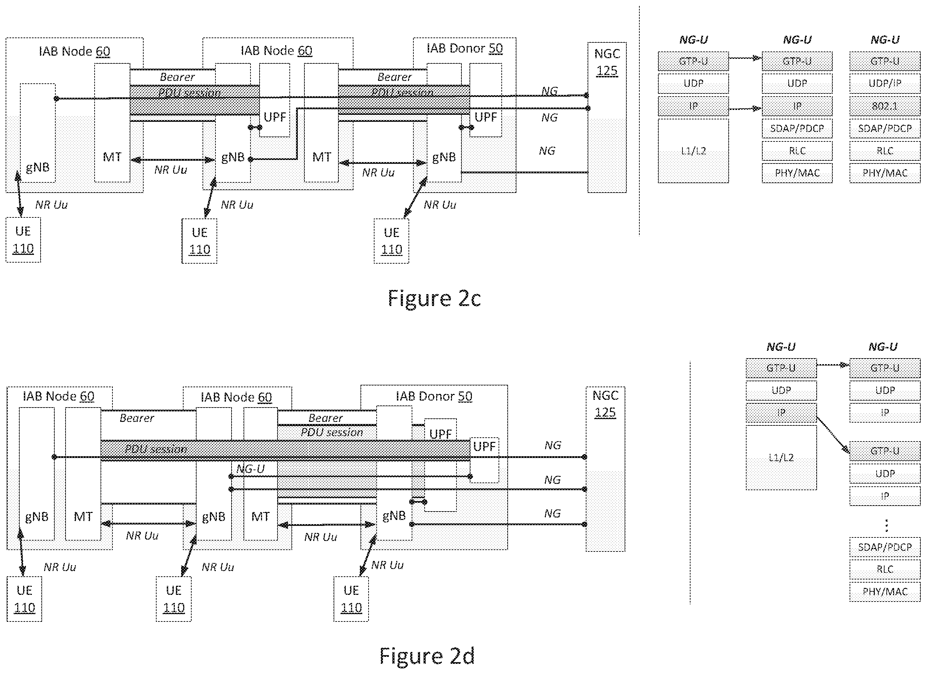

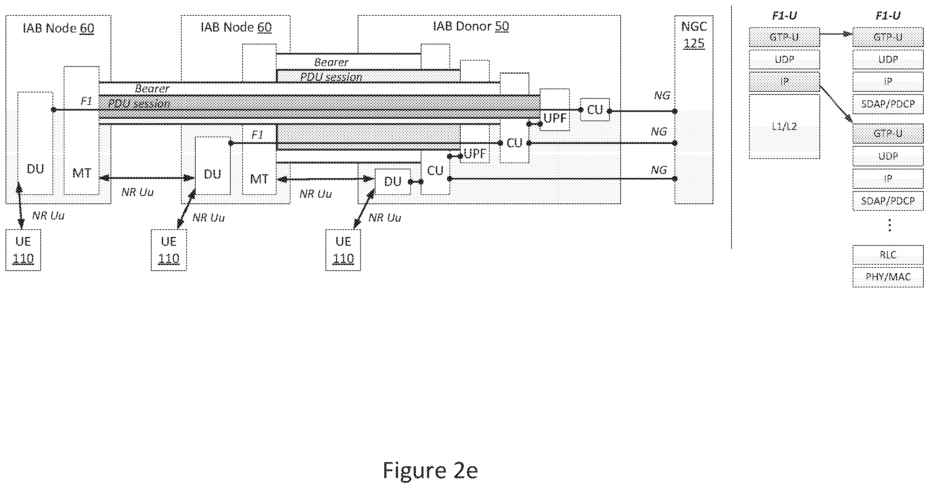

Figures 2a-2e illustrate example IAB architectures;
Figure 3 illustrates an example User Plane protocol stack;
Figure 4 illustrates an example Control Plane protocol stack;
Figure 5 illustrates an example IAB-node integration procedure;

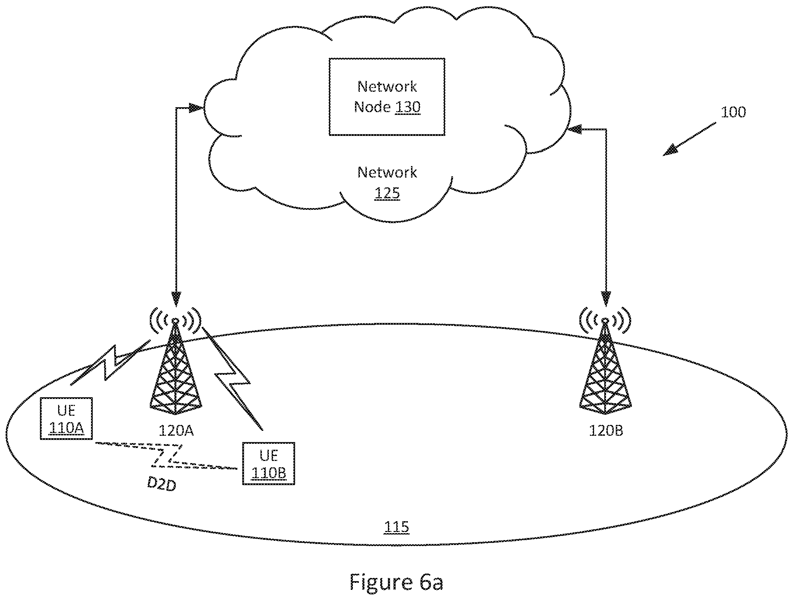

Figure 6a illustrates an example wireless network;

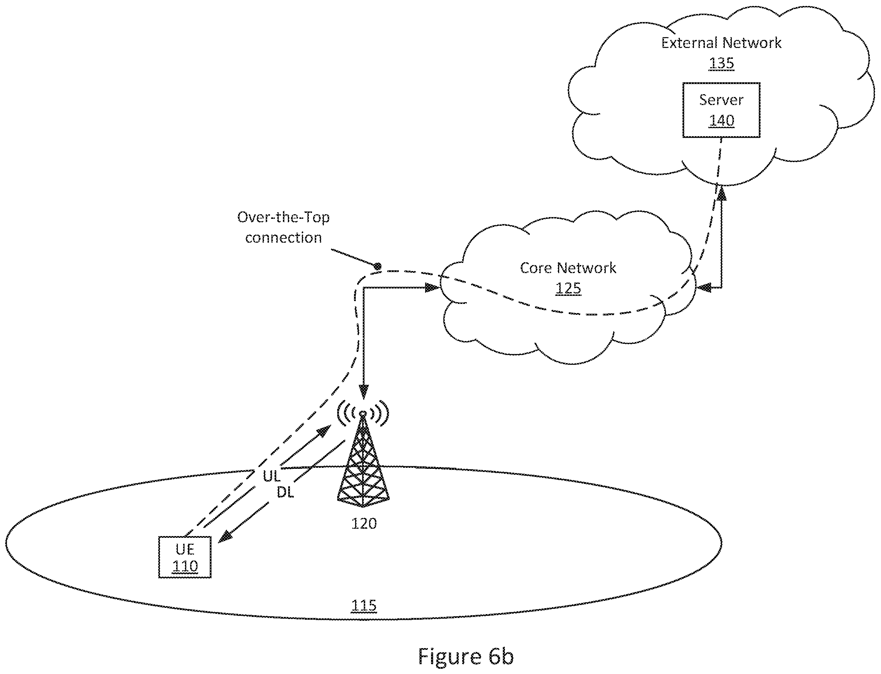

Figure 6b illustrates an example of signaling in a wireless network;

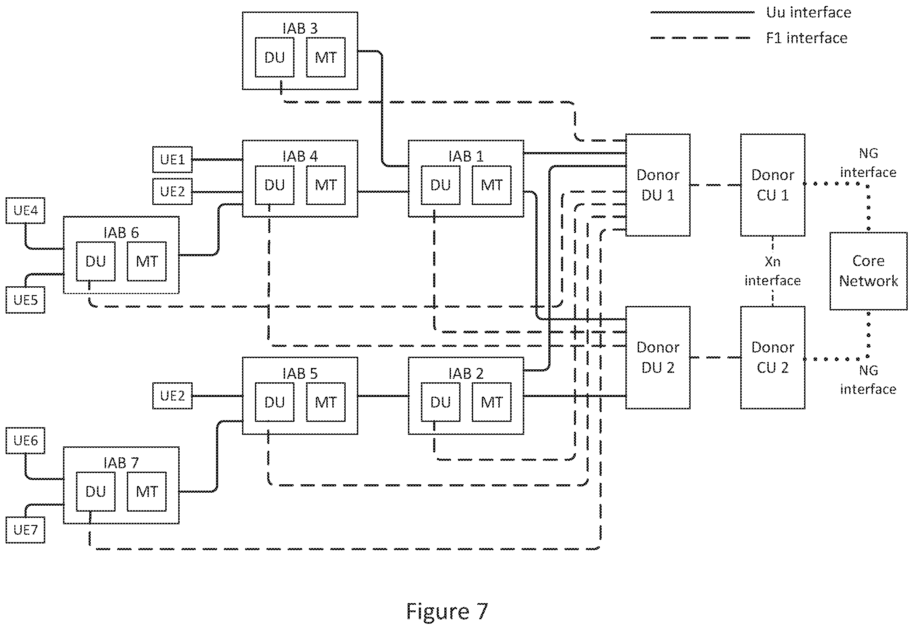

Figure 7 illustrates an example IAB network topology;

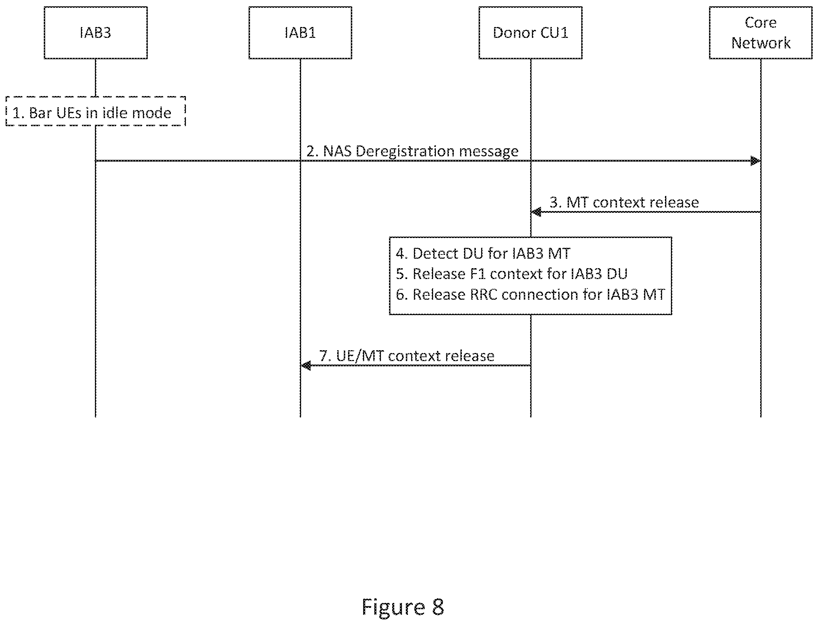

Figure 8 is a signaling diagram illustrating a first example embodiment;

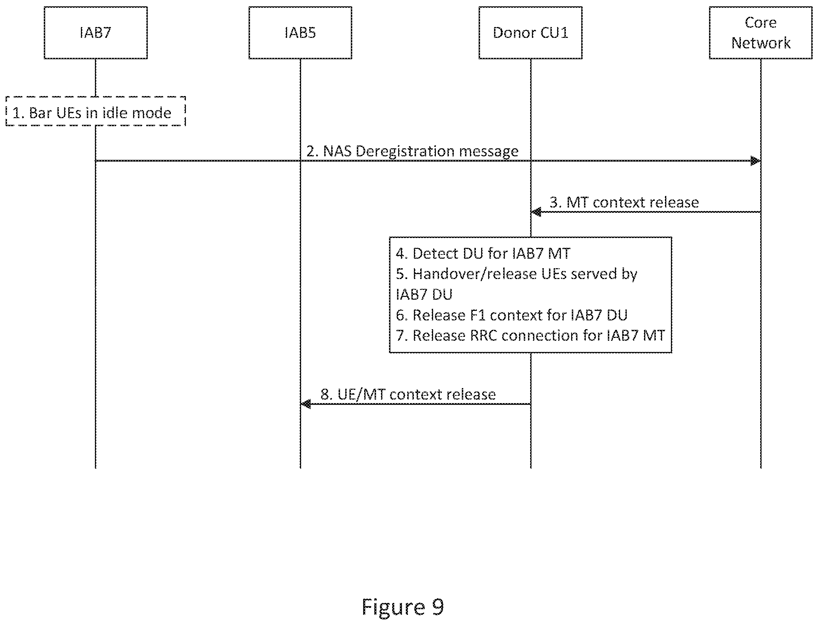

Figure 9 is a signaling diagram illustrating a second example embodiment;

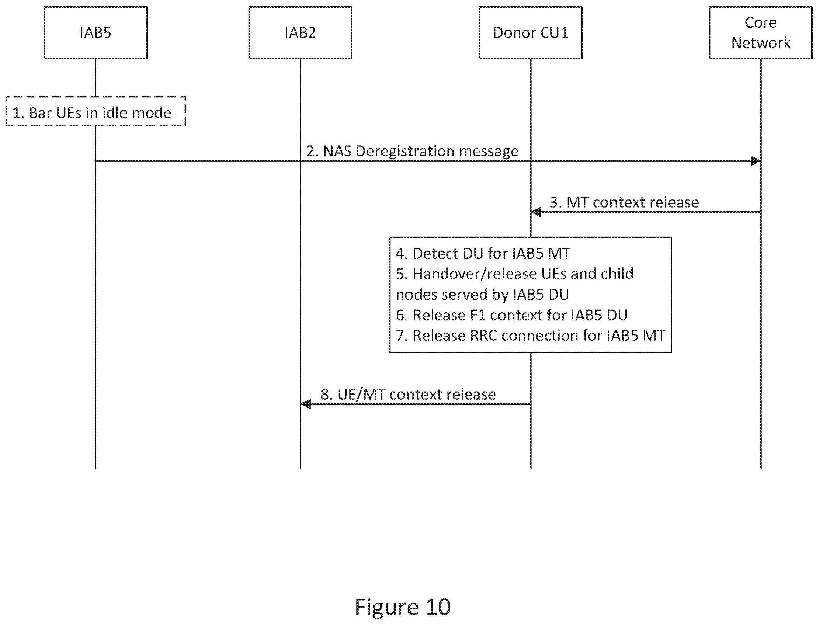

Figure 10 is a signaling diagram illustrating a third example embodiment;

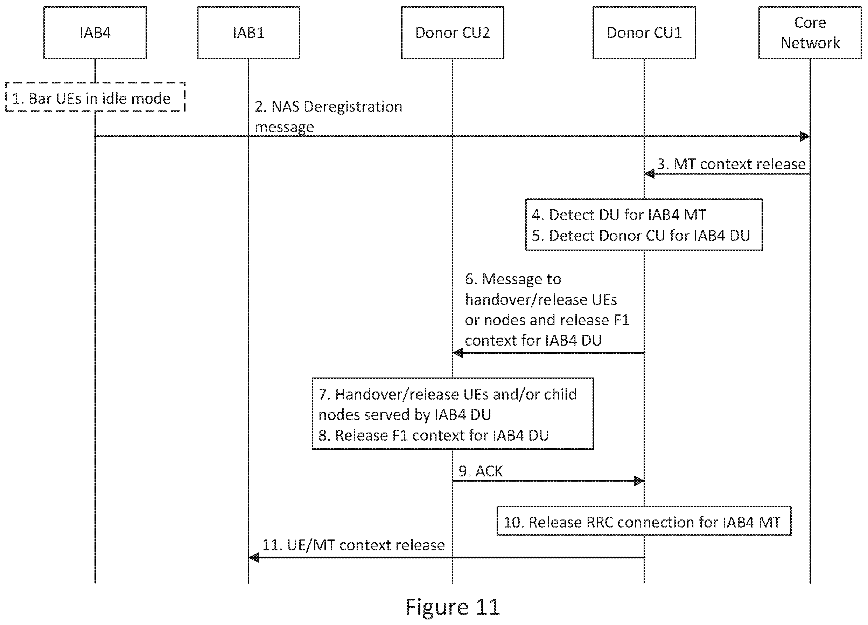

Figure 11 is a signaling diagram illustrating a fourth example embodiment;

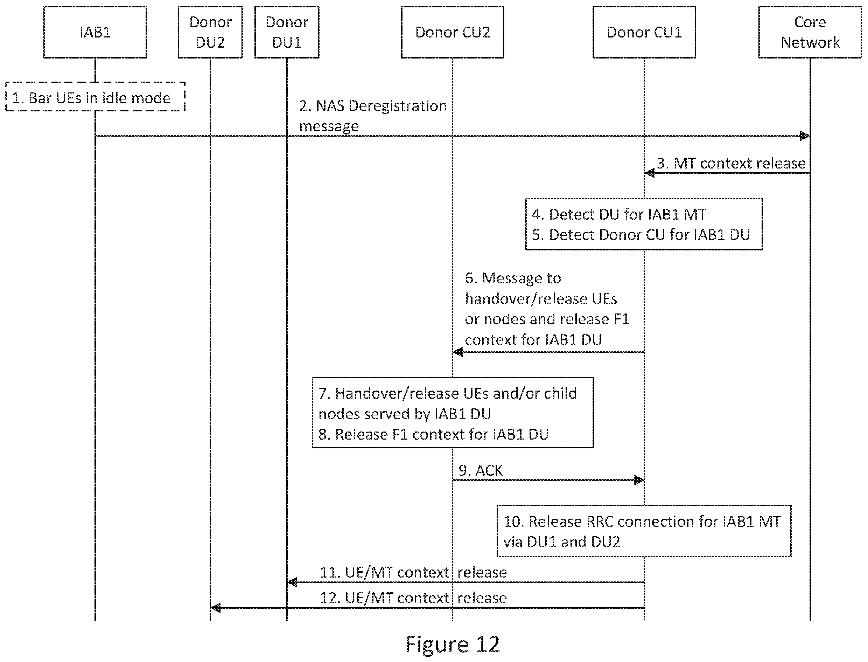

Figure 12 is a signaling diagram illustrating a fifth example embodiment;

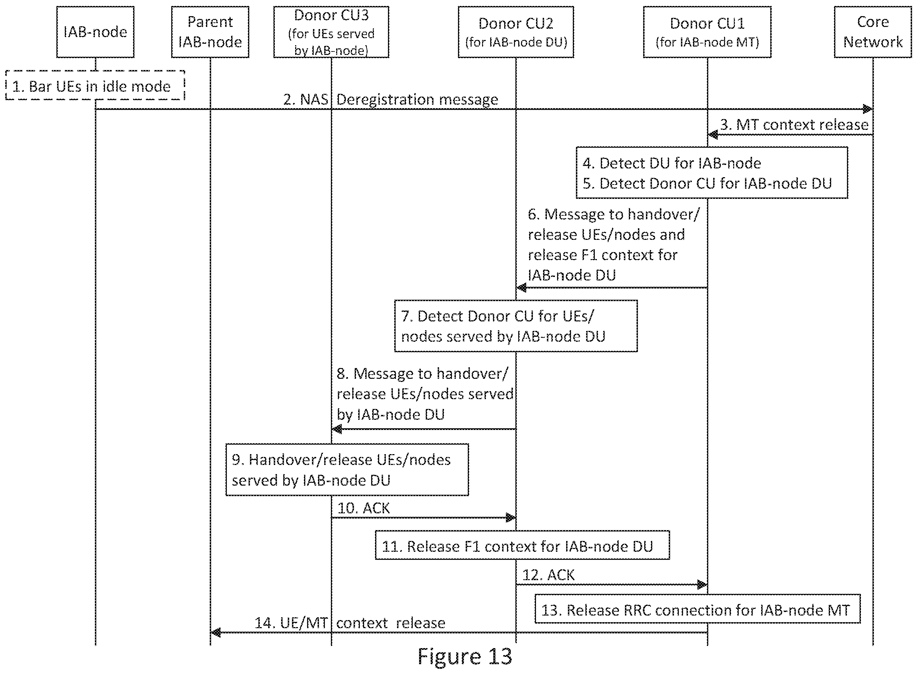

Figure 13 is a signaling diagram illustrating a sixth example embodiment;

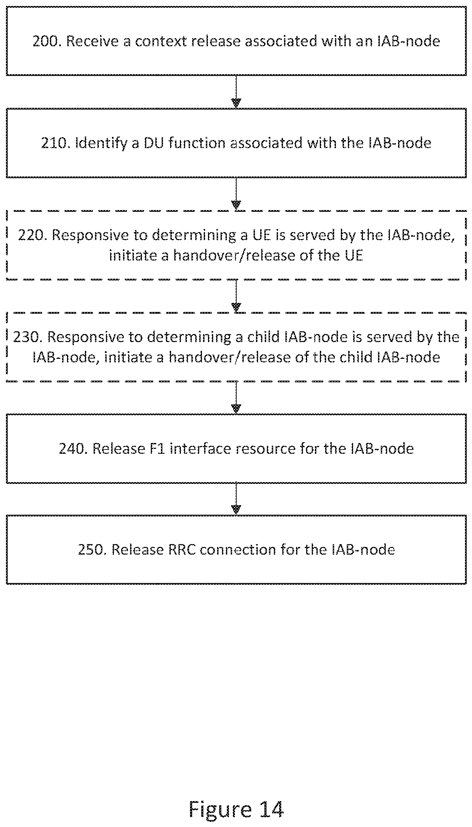

Figure 14 is a flow chart illustrating a method which can be performed in a network node;

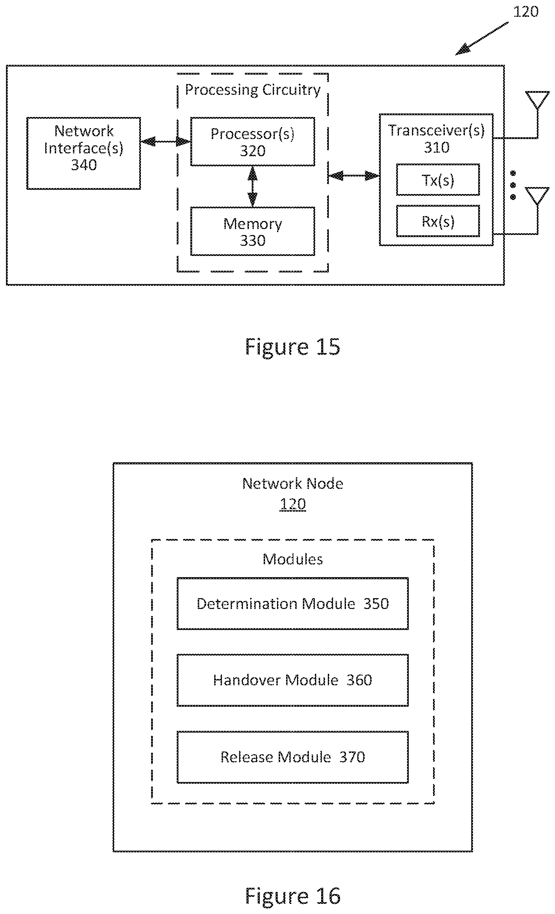

Figure 15 is a block diagram of an example network node;
Figure 16 is a block diagram of an example network node with modules; and

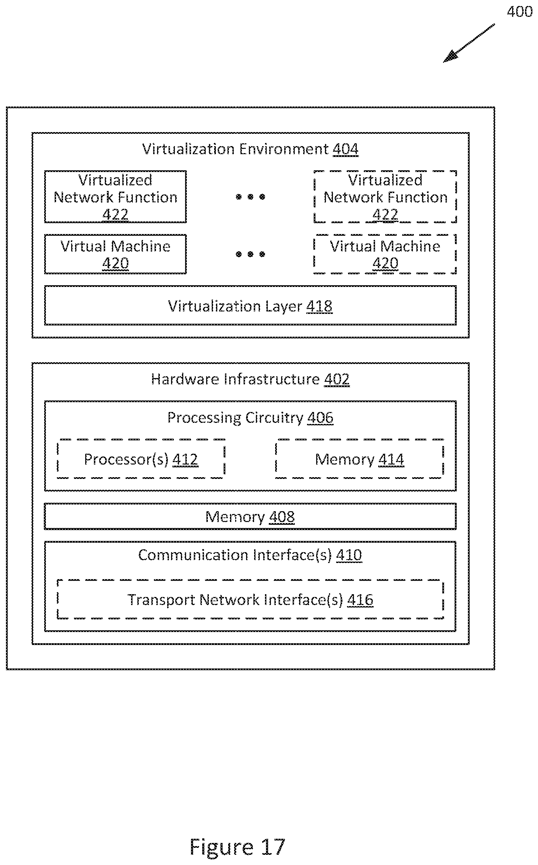

Figure 17 is a block diagram of an example virtualized processing node.

### DETAILED DESCRIPTION

The embodiments set forth below represent information to enable those skilled in the art to practice the embodiments.

In the following description, numerous specific details are set forth. However, it is understood that embodiments may be practiced without these specific details. In other instances, well-known circuits, structures, and techniques have not been shown in detail in order not to obscure the understanding of the description. Those of ordinary skill in the art, with the included description, will be able to implement appropriate functionality without undue experimentation.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to implement such feature, structure, or characteristic in connection with other embodiments whether or not explicitly described.

In some embodiments, the non-limiting term "user equipment" (UE) is used and it can refer to any type of wireless device which can communicate with a network node and/or with another UE in a cellular or mobile or wireless communication system. Examples of UE are target device, device to device (D2D) UE, machine type UE or UE capable of machine to machine (M2M) communication, personal digital assistant, tablet, mobile terminal, smart phone, laptop embedded equipped (LEE), laptop mounted equipment (LME), USB dongles, ProSe UE, V2V UE, V2X UE, MTC UE, eMTC UE, FeMTC UE, UE Cat 0, UE Cat M1, narrow band IoT (NB-IoT) UE, UE Cat NB1, etc. Example embodiments of a UE are described in more detail herein.

In some embodiments, the non-limiting term "network node" is used and it can correspond to any type of radio access node (or radio network node) or any network node, which can communicate with a UE and/or with another network node in a cellular or mobile or wireless communication system. Examples of network nodes are NodeB, MeNB, SeNB, a network node belonging to MCG or SCG, base station (BS), multi-standard radio (MSR) radio access node such as MSR BS, eNodeB, network controller, radio network controller (RNC), base station controller (BSC), relay, donor node controlling relay, base transceiver station (BTS), access point (AP), transmission points, transmission nodes, RRU, RRH, nodes in distributed antenna system (DAS), core network node (e.g. MSC, MME, etc.), O&M, OSS, Self-organizing Network (SON), positioning node (e.g. E-SMLC), MDT, test equipment, etc. Example embodiments of a network node are described in more detail below with respect to Figure 15.

In some embodiments, the term "radio access technology" (RAT) refers to any RAT e.g. UTRA, E-UTRA, narrow band internet of things (NB-IoT), WiFi, Bluetooth, next generation RAT (NR), 4G, 5G, etc. Any of the first and the second nodes may be capable of supporting a single or multiple RATs.

The term "radio node" used herein can be used to denote a wireless device or a network node.

In some embodiments, a UE can be configured to operate in carrier aggregation (CA) implying aggregation of two or more carriers in at least one of downlink (DL) and uplink (UL) directions. With CA, a UE can have multiple serving cells, wherein the term 'serving' herein means that the UE is configured with the corresponding serving cell and may receive from and/or transmit data to the network node on the serving cell e.g. on PCell or any of the SCells. The data is transmitted or received via physical channels e.g. PDSCH in DL, PUSCH in UL, etc. A component carrier (CC) also interchangeably called as carrier or aggregated carrier, PCC or SCC is configured at the UE by the network node using higher layer signaling e.g. by sending RRC configuration message to the UE. The configured CC is used by the network node for serving the UE on the serving cell (e.g. on PCell, PSCell, SCell, etc.) of the configured CC. The configured CC is also used by the UE for performing one or more radio measurements (e.g. RSRP, RSRQ, etc.) on the cells operating on the CC, e.g. PCell, SCell or PSCell and neighboring cells.

In some embodiments, a UE can also operate in dual connectivity (DC) or multi-connectivity (MC). The multicarrier or multicarrier operation can be any of CA, DC, MC, etc. The term "multicarrier" can also be interchangeably called a band combination.

The term "radio measurement" used herein may refer to any measurement performed on radio signals. Radio measurements can be absolute or relative. Radio measurements can be e.g. intra-frequency, inter-frequency, CA, etc. Radio measurements can be unidirectional (e.g., DL or UL or in either direction on a sidelink) or bidirectional (e.g., RTT, Rx-Tx, etc.). Some examples of radio measurements: timing measurements (e.g., propagation delay, TOA, timing advance, RTT, RSTD, Rx-Tx, etc.), angle measurements (e.g., angle of arrival), power-based or channel quality measurements (e.g., path loss, received signal power, RSRP, received signal quality, RSRQ, SINR, SNR, interference power, total interference plus noise, RSSI, noise power, CSI, CQI, PMI, etc.), cell detection or cell identification, RLM, SI reading, etc. The measurement may be performed on one or more links in each direction, e.g., RSTD or relative RSRP or based on signals from different transmission points of the same (shared) cell.

The term "signaling" used herein may comprise any of: high-layer signaling (e.g., via RRC or a like), lower-layer signaling (e.g., via a physical control channel or a broadcast channel), or a combination thereof. The signaling may be implicit or explicit. The signaling may further be unicast, multicast or broadcast. The signaling may also be directly to another node or via a third node.

The term "time resource" used herein may correspond to any type of physical resource or radio resource expressed in terms of length of time. Examples of time resources include: symbol, time slot, sub-frame, radio frame, TTI, interleaving time, etc. The term "frequency resource" may refer to sub-band within a channel bandwidth, subcarrier, carrier frequency, frequency band. The term "time and frequency resources" may refer to any combination of time and frequency resources.

Some examples of UE operation include: UE radio measurement (see the term "radio measurement" above), bidirectional measurement with UE transmitting, cell detection or identification, beam detection or identification, system information reading, channel receiving and decoding, any UE operation or activity involving at least receiving of one or more radio signals and/or channels, cell change or (re)selection, beam change or (re)selection, a mobility-related operation, a measurement-related operation, a radio resource management (RRM)-related operation, a positioning procedure, a timing related procedure, a timing adjustment related procedure, UE location tracking procedure, time tracking related procedure, synchronization related procedure, MDT-like procedure, measurement collection related procedure, a CA-related procedure, serving cell activation/deactivation, CC configuration/de-configuration, etc.

Figure 6a illustrates an example of a wireless network 100 that can be used for wireless communications. Wireless network 100 includes wireless devices, such as UEs 110A-110B, and network nodes, such as radio access nodes 120A-120B (e.g. eNBs, gNBs, etc.), connected to one or more core network nodes 130 via an interconnecting network 125. The network 100 can use any suitable deployment scenarios. UEs 110 within coverage area 115 can each be capable of communicating directly with radio access nodes 120 over a wireless interface. In some embodiments, UEs 110 can also be capable of communicating with each other via D2D communication.

As an example, UE 110A can communicate with radio access node 120A over a wireless interface. That is, UE 110A can transmit wireless signals to and/or receive wireless signals from radio access node 120A. The wireless signals can contain voice traffic, data traffic, control signals, and/or any other suitable information. In some embodiments, an area of wireless signal coverage 115 associated with a radio access node 120 can be referred to as a cell.

The interconnecting network 125 can refer to any interconnecting system capable of transmitting audio, video, signals, data, messages, etc., or any combination of the preceding. The interconnecting network 125 can include all or a portion of a public switched telephone network (PSTN), a public or private data network, a local area network (LAN), a metropolitan area network (MAN), a wide area network (WAN), a local, regional, or global communication or computer network such as the Internet, a wireline or wireless network, an enterprise intranet, or any other suitable communication link, including combinations thereof.

In some embodiments, the network node 130 can be a core network node 130, managing the establishment of communication sessions and other various other functionalities for UEs 110. Examples of core network node 130 can include mobile switching center (MSC), MME, serving gateway (SGW), packet data network gateway (PGW), operation and maintenance (O&M), operations support system (OSS), SON, positioning node (e.g., Enhanced Serving Mobile Location Center, E-SMLC), MDT node, etc. UEs 110 can exchange certain signals with the core network node 130 using the non-access stratum layer. In non-access stratum signaling, signals between UEs 110 and the core network node 130 can be transparently passed through the radio access network. In some embodiments, radio access nodes 120 can interface with one or more network nodes 130 over an internode interface.

In some embodiments, network node 130 can be a location server 130, such as an E-SMLC. Location server 130 can exchange signals directly, or indirectly, with UEs 110, radio access nodes 120 and/or other network node(s).

In some embodiments, radio access node 120 can be a "distributed" radio access node in the sense that the radio access node 120 components, and their associated functions, can be separated into two main units (or sub-radio network nodes) which can be referred to as the central unit (CU) and the distributed unit (DU). Different distributed radio network node architectures are possible. For instance, in some architectures, a DU can be connected to a CU via dedicated wired or wireless link (e.g., an optical fiber cable) while in other architectures, a DU can be connected a CU via a transport network. Also, how the various functions of the radio access node 120 are separated between the CU(s) and DU(s) may vary depending on the chosen architecture.

Figure 6b illustrates an example of signaling in wireless network 100. As illustrated, the radio interface generally enables the UE 110 and the radio access node 120 to exchange signals and messages in both a downlink direction (from the radio access node 120 to the UE 110) and in an uplink direction (from the UE 110 to the radio access node 120).

The radio interface between the wireless device 110 and the radio access node 120 typically enables the UE 110 to access various applications or services provided by one or more servers 140 (also referred to as application server or host computer) located in an external network(s) 135. The connectivity between the UE 110 and the server 140, enabled at least in part by the radio interface between the UE 110 and the radio access node 120, can be described as an "over-the-top" (OTT) or "application layer" connection. In such cases, the UE 110 and the server 140 are configured to exchange data and/or signaling via the OTT connection, using the radio access network 100, the core network 125, and possibly one or more intermediate networks (e.g. a transport network, not shown). The OTT connection may be transparent in the sense that the participating communication devices or nodes (e.g., the radio access node 120, one or more core network nodes 130, etc.) through which the OTT connection passes may be unaware of the actual OTT connection they enable and support. For example, the radio access node 120 may not or need not be informed about the previous handling (e.g., routing) of an incoming downlink communication with data originating from the server 140 to be forwarded or transmitted to the UE 110. Similarly, the radio access node 120 may not or need not be aware of the subsequent handling of an outgoing uplink communication originating from the UE 110 towards the server 140.

Returning to the IAB network, an IAB-node comprises two functionalities: the MT and DU, and these functions can communicate with different entities on the network side. For this reason, the contexts (e.g. containing the current configuration/state or other information) for these two functions are stored in different entities in the RAN. For the MT function, the DU functionality of its parent IAB-node (or the donor DU, if the IAB-node is connected directly to the Donor DU) stores parts of the context and the Donor CU also stores the context of the MT. For the DU function, the F1 interface-related data (i.e. the application level data required to correctly interoperate on the F1 interface) is stored in the Donor CU. In addition, the contexts of any UEs served by the IAB-node are also stored in the Donor CU. Furthermore, the core network (CN) stores only the context for the MT functionality of an IAB-node and would not have any knowledge about the corresponding DU functionality of an IAB-node, as it is configured by the Donor CU via the RAN F1 interface. There can also be cases where the Donor CUs serving the MT and DU parts of an IAB-node, and the UEs connected to the IAB-node, can be different from each other (e.g. for load balancing reason).

There are several use cases for IAB nodes, for example, deploying them in public places for capacity enhancement and using them as home nodes for better connectivity and capacity within the home or to surrounding garden or neighbor houses. For situations when the IAB-node is not serving any UE, or is under-utilized, or the node needs to be upgraded/maintained/etc. it may be necessary to power off or release the IAB-node from the network. However, there is no mechanism for how an IAB-node can be released from the network when required. The existing UE-initiated Deregistration procedure (3GPP TS 23.502) can release the MT/UE context from the CN, while the AMF-initiated MT/UE context release procedure (3GPP TS 38.413) can release the MT/UE context from the RAN. However, there is no mechanism for IAB nodes to release the F1 (non-UE associated) context for the DU functionality co-located with the MT part. Additionally, there is no solution for graceful handover of any UEs or IAB nodes connected to the IAB-node which needs to be powered off. If the IAB node would just power off by itself, those UEs will lose the connection, detect a radio link failure, and initiate a re-establishment procedure which could lead to service interruption and excess signaling (causing increased UE battery consumption). If there were child IAB nodes connected to the IAB-node being powered off, the problem may be exacerbated as the IAB-node has to perform the re-establishment topology adaptation procedure that will disturb/interrupt the data flow of any UEs that it might be serving.

Some embodiments described herein provide a systematic IAB-node release procedure that can ensure no hanging contexts in the RAN as well as in the CN and can minimize service interruption time for UEs and IAB nodes camped in an IAB-node that is to be released/switched-off, by properly handing the children UE/IAB nodes to other cells/nodes or actively release them from the DU functionality of IAB-node in order to minimize impacts to end users.

When an IAB-node release/power-offprocess is triggered, the IAB-node may broadcast a cell barring information on the cells that it is hosting to re-direct any camped UEs that are in idle mode. This will trigger those UEs to re-select to a different cell possibly served by another node (thus preventing these UEs from starting a connection establishment or resume towards the cells controlled by the IAB-node's DU while the IAB node release procedure is ongoing).

The MT function of the IAB-node can then send a NAS deregistration request message to the AMF (CN). The AMF will release the MT context of the IAB-node from CN and will then send an MT context release message to the Donor CU (RAN). Once the Donor CU receives the MT context release message from AMF, the Donor CU can check if there are any UEs and/or child IAB-nodes (MT functionality/part) that are being served by the IAB-node associated with the MT part that is being released (this could be one or several DUs that are part of the same IAB logical node). If there are any UEs and/or child IAB-nodes connected to the associated IAB-node DU(s), the Donor CU can trigger the handover of these UEs/IAB-nodes to other suitable nodes/cells (another IAB-node, normal DU, another gNB, etc.) based, for example, on the most recent measurement results from these UEs/IAB-nodes. An alternative is to have the UEs/IAB-nodes be released with redirection to another RAT/frequency.

Once the UEs/child nodes that were being served by the IAB-node to be shut down are properly handed-over, the Donor CU can release F1 interface resources (i.e., release the non-UE associated context for the DU) for the IAB node's DU(s), and then it can release the RRC connection for the MT functionality of the IAB-node. Releasing the F1 and RRC resources can also be performed in the opposite order, but in this case the F1 release will be locally performed in both the IAB-node and Donor CU (possibly triggered based on the RRC connection release). Finally, the Donor CU can send an MT context release message to the parent IAB-node (or Donor DU, in case the IAB node is directly connected to the donor DU) for releasing the MT context from RAN completely.

There are several potential examples for the trigger for releasing or powering off an IAB-node, including:
- A user or service technician has pressed a power off button or similar on the IAB node.
- The IAB-node has received information from the OAM system that it should be switched off.
- The IAB node has received a corrupt or non-compliant configuration forcing the IAB-node to re-"attach" to the network.
- The IA- node still has radio connectivity to its parent node, but the quality is low and there is no alternative parent node/link, thus it wants to temporarily shut down the connection.
- The IAB-node may be configured to go to a pre-scheduled to a dormant state (e.g. during late hours, where there are not many UEs expected to be active), and it can start the release procedure at this scheduled time(s).

Embodiments will be described with reference to the example IAB network topology illustrated in Figure 7. In this example, the Donor DU1 has two child nodes: IAB1 and IAB2, while the Donor DU2 has also two child nodes: IAB1 and IAB2. The IAB 1 has two parent IAB Donor nodes (DU1 and DU2) and two child nodes: IAB3 and IAB4. IAB2 also has two parent IAB Donor nodes (DU1 and DU2) and one child node: IAB5. IAB4 has one child node IAB6, while IAB5 has also one child node IAB7.

Whenever an IAB-node triggers the release process/procedure, its MT function will send a NAS deregistration request message to the core network. Consequently, the core network will release the MT context of the IAB-node from the core network and will send an MT context release message (could be a NG UE context release message) to the IAB-donor CU of the IAB-node being released. The rest of the release procedure will depend on the condition/situation of the IAB-node, and there are several possible procedures.

In a first embodiment, both the DU and MT parts of the IAB-node are served by the same IAB-donor CU and the IAB-node is not serving any UE(s) or child IAB-node(s) (for instance, IAB-node "IAB3" in Figure 7). For this embodiment, an example release procedure for IAB3 is shown in Figure 8. Donor CU1 receives a MT context release associated with IAB3. The Donor CU1 will identify/detect the DU function for IAB3 and will release the F1 interface resources (i.e. release the non-UE associated context for the IAB3 DU). Next, Donor CU1 will release the RRC connection for the IAB3 MT. Finally, Donor CU1 will send a UE/MT context release message to the parent IAB-node of IAB3 (e.g. IAB1) to release the MT (e.g. IAB3 MT) context from the parent DU (e.g. IAB1 DU).

In a second embodiment, both the DU and MT parts of the IAB-node are served by the same IAB-donor CU and there are UEs served by the IAB-node (for instance, IAB-node "IAB7" in Figure 7). For this embodiment, an example release procedure for IAB7 is shown in Figure 9. Donor CU1 will detect the DU function for IAB7 and will then handover the active UEs (e.g. UE6 and UE7) to other cells/nodes (IAB5 or IAB6, for example) or will release them from IAB7 via RRC release with redirect. Next, the Donor CU1 will release F1 interface resources (i.e. release the non-UE associated context for the IAB7 DU) and will then release the RRC connection for the MT (IAB7 MT). Finally, Donor CU1 will send a UE/MT context release message to the parent IAB-node (IAB5) to release the MT (e.g. IAB7 MT) context from the parent DU (e.g. IAB5 DU).

In a third embodiment, both the DU and MT parts of the IAB-node are served by the same Donor CU and there are both UEs and child IAB-nodes served by the IAB-node (for instance, IAB-node "IAB5" in Figure 7). For this embodiment, an example release procedure for IAB5 is shown in Figure 10. Donor CU1 will detect the DU function for IAB5 and will then handover the active UE(s) (e.g. UE3) to other cells/nodes (IAB6 or IAB2, for example) or will release them from IAB5 via RRC Release with redirect. Similarly, the child IAB-node(s) (e.g. IAB7) will be handed-over to other cells/nodes (IAB6 or IAB2, for example) or will be released from IAB5 via RRC Release with redirect. For the latter case, any UEs served by the child IAB-node (e.g. UE6 and UE7) will also be either handed-over or released with redirect. Donor CU1 will release F1 interface resources (e.g. context for IAB5 DU) and release the RRC connection for the MT (e.g. IAB5 MT). Finally, Donor CU1 will send a UE/MT context release message to the parent IAB-node (IAB2) to release the MT (e.g. IAB5 MT) context from the parent DU (e.g. IAB2 DU).

As a variant of the above embodiment, the Donor CU could send a separate message to all IAB nodes (in this case only IAB7) connected to the IAB-node (IAB5) which is about to be released, thus making it possible for those IAB nodes to trigger MT detach (de-registration) to the CN. In this case the Donor CU can wait to release the first IAB-node (IAB5) until the connected IAB node(s) (IAB7) are released.

In a fourth embodiment, the DU and MT parts of the IAB-node are served by different Donor CUs and there are both UEs and child IAB-nodes served by the IAB-node (for instance, IAB-node "IAB4" in Figure 7). For this embodiment, an example release procedure for IAB4 is shown in Figure 11, where the IAB4 DU function is served by Donor CU2 while the IAB4 MT function is served by Donor CU1. For this case, Donor CU1, will first identify the DU function for the IAB4 and then determine the associated IAB-donor CU (e.g. Donor CU2) for the detected IAB4 DU. Donor CU1 (e.g. the Donor CU of IAB4 MT) will send an Xn interface message to Donor CU2 (e.g. the Donor CU of IAB4 DU) to handover or release any UEs (e.g. UE1 and UE2) and child IAB-nodes (e.g. IAB6), as well as UEs (e.g. UE4 and UE5) served by the child IAB-node. The Donor CU2 will perform the required tasks (handover/release of UEs and/or child nodes, release the F1 context for IAB4 DU) and will reply with an ACK or response message to Donor CU1. After receiving the ACK from Donor CU2, the Donor CU1 will release the RRC resources for the MT (e.g. IAB4 MT) and can send a UE/MT context release message to the parent IAB-node (e.g. IAB 1) to release the MT (e.g. IAB4 MT) context from the parent DU (e.g. IAB1 DU).

In a fifth embodiment, the DU and MT parts of the IAB-node are served by different IAB-donor CUs and the MT has multiple parent nodes but one MT module (for instance, IAB-node "IAB1" in Figure 7). For this embodiment, an example release procedure for IAB1 is shown in Figure 12. In general, the procedure described for the fourth embodiment (Figure 11) will be adopted with the addition that the Donor CU for the MT function (e.g. Donor CU1) will release resources for both RRC connections for IAB1 MT and will also send a UE/MT context release message to both of the parent nodes (e.g. Donor DU1 and Donor DU2).

In a sixth embodiment, the DU, MT, and the UEs (and/or child IAB-nodes served by the IAB-node to be released) are served by different IAB-donor CUs. For this embodiment, an example release procedure is shown in Figure 13. First, the Donor CU for the MT part of the IAB-node (e.g. Donor CU1) will detect the DU function for the IAB-node and its associated Donor CU (e.g. Donor CU2). Donor CU1 will send an Xn message to Donor CU2 to handover or release with redirect the UEs (and/or child IAB-nodes served by the IAB-node) to other cells/nodes. Donor CU2 will detect the Donor CU (e.g. Donor CU3) associated with these UEs and/or child IAB-nodes and will send an Xn message to that Donor CU (e.g. Donor CU3). Donor CU3 will handover or release with redirect the UEs (and/or child IAB-nodes) and will send an ACK or response message to Donor CU2. The Donor CU2 will then release the F1 context for the DU part of the IAB-node and will send an ACK or response message to Donor CU1. Upon receiving the ACK, the Donor CU1 will release the RRC connection for the MT part of IAB-node and then will send a UE/MT context release message to the parent node(s) of the IAB-node to release the IAB-node MT context from the parent DU.

Some embodiments described herein provide a systematic IAB-node release procedure to ensure no hanging contexts in the RAN and the CN. Service interruption time can be minimized for UEs and IAB nodes camped in an IAB-node that is to be released/switched-off, by properly handing the children UE/IAB nodes to other cells/nodes or actively release them from the DU functionality of IAB-node in order to minimize impacts to end users.

An orderly release of the IAB-node can improve the end user performance by reducing the service interruption of any UEs and IAB nodes (and their descendant IAB nodes and UEs) that were being served by the IAB-node being release since the RAN node handover/re-directs the UEs before the connection to the IAB-node is released. It can also reduce UE battery consumption since the UEs do not need to perform radio link failure procedures which could result in extra battery consumption.

Figure 14 is a flow chart illustrating a method which can be performed in a network node. The network node can be a radio access node, such as eNB or gNB 120. The network node can include the functionality of an IAN-donor 50 and/or IAB-donor CU 52 as described herein. The method can include:

Step 200: Receiving a context release message associated with an IAB-node. The context release message can be a MT context release or an indication of MT context release associated with the IAB-node. The context release can be obtained or received from a core network node. The network node receiving the context release message can be the IAB-donor CU for the IAB-node MT (e.g. the network node is serving the MT function of the IAB-node being released).

Step 210: Identifying/determining/detecting a DU function associated with the IAB-node. The MT function being released is associated with a corresponding DU function in the IAB-node.

In some embodiments, the network node can further determine the Donor CU for the identified IAB-node DU function. The Donor CU can be the network node itself (e.g. it is the IAB-donor CU for both the MT and DU parts of the IAB-node being released). In other embodiments, the Donor CU for the identified IAB-node DU can be another network node (e.g. a second IAB-donor CU).

Step 220: Determining if there are any UE(s) served by the IAB-node. Responsive to determining that at least one UE is served by the IAB-node, initiate a handover and/or release of the at least one UE. In some embodiments, the at least one UE can be handed over from the IAB-node to another node (e.g. a second IAB-node). In some embodiments, the at least one UE can be released from the IAB-node via RRC release with redirect.

In the case where the network node serves the DU function of the IAB-node, the handover/release of such UE(s) can be initiated directly by the network node. In the case where the IAB-node DU is served by another node (e.g. the second IAB-donor CU), the network node can transmit a handover/release message (such as a handover request or an RRC release) to the other node. The message can be transmitted via the Xn interface.

Step 230: Determining if there are any child IAB-nodes served by the IAB-node. Responsive to determining that at least one child IAB-node is served by the IAB node, initiate a handover and/or release of the at least one child IAB-node. Similar to as was described with respect to Step 220, this can include transmitting a handover/release message (such as a Xn message) to a second IAB-donor CU if the DU function of the IAB-node is served by a different node.

Step 240: Releasing the F1 interface context and/or resources associated with the IAB-node. Releasing the F1 resource(s) can include releasing a non-UE associated context associated with the IAB-node DU function. In some embodiments, this can be performed responsive to determining that the network node serves as the Donor CU for the IAB-node DU. In other embodiments, this can include initiating the release of F1 interface resource(s) by a second node, responsive to determining that the second node serves as the Donor CU for the IAB-node DU.

Step 250: Releasing the RRC connection associated with the IAB-node MT function.

In some embodiments, this can further include transmitting a context release message, such as a UE/MT context release. In some embodiments, a context release message can be transmitted to a parent IAB-node to release the MT context from the parent node's DU function. In some embodiments, context release message(s) can be transmitted to multiple parent IAB-nodes to release the MT context from the parent DUs. In some embodiments, the parent IAB-node can be an IAB-donor DU. In some embodiments, transmitting the context release message can be considered part of releasing the RRC connection (e.g. step 250), while in other embodiments it can be considered a separate step.

It will be appreciated that one or more of the above steps can be performed simultaneously and/or in a different order. Also, steps illustrated in dashed lines are optional and can be omitted in some embodiments.

Figure 15 is a block diagram of an exemplary network node, such as radio access node 120, in accordance with certain embodiments. Network node 120 can perform the functionality of the various IAB nodes described herein, such as IAN-donor 50 and/or IAB-donor CU 52. Network node 120 may include one or more of a transceiver 310, processor 320, memory 330, and network interface 340. In some embodiments, the transceiver 310 facilitates transmitting wireless signals to and receiving wireless signals from wireless devices, such as UE 110 (e.g., via transmitter(s) (Tx), receiver(s) (Rx), and antenna(s)). The processor 320 executes instructions to provide some or all of the functionalities described above as being provided by a radio access node 120, the memory 330 stores the instructions executed by the processor 320. In some embodiments, the processor 320 and the memory 330 form processing circuitry. The network interface 340 can communicate signals to backend network components, such as a gateway, switch, router, Internet, Public Switched Telephone Network (PSTN), core network nodes or radio network controllers, etc.

The processor 320 can include any suitable combination of hardware to execute instructions and manipulate data to perform some or all of the described functions of radio access node 120, such as those described above. In some embodiments, the processor 320 may include, for example, one or more computers, one or more central processing units (CPUs), one or more microprocessors, one or more application specific integrated circuits (ASICs), one or more field programmable gate arrays (FPGAs) and/or other logic.

The memory 330 is generally operable to store instructions, such as a computer program, software, an application including one or more of logic, rules, algorithms, code, tables, etc. and/or other instructions capable of being executed by a processor 320. Examples of memory 330 include computer memory (for example, Random Access Memory (RAM) or Read Only Memory (ROM)), mass storage media (for example, a hard disk), removable storage media (for example, a Compact Disk (CD) or a Digital Video Disk (DVD)), and/or or any other volatile or non-volatile, non-transitory computer-readable and/or computer-executable memory devices that store information.

In some embodiments, the network interface 340 is communicatively coupled to the processor 320 and may refer to any suitable device operable to receive input for node 120, send output from node 120, perform suitable processing of the input or output or both, communicate to other devices, or any combination of the preceding. The network interface 340 may include appropriate hardware (e.g., port, modem, network interface card, etc.) and software, including protocol conversion and data processing capabilities, to communicate through a network.

Other embodiments of network node 120 can include additional components beyond those shown in Figure 15 that may be responsible for providing certain aspects of the node's functionalities, including any of the functionalities described above and/or any additional functionalities (including any functionality necessary to support the solutions described above). The various different types of network nodes may include components having the same physical hardware but configured (e.g., via programming) to support different radio access technologies, or may represent partly or entirely different physical components.

Processors, interfaces, and memory similar to those described with respect to Figure 15 may be included in other network nodes (such as UE 110, core network node 130, IAB nodes, etc.). Other network nodes may optionally include or not include a wireless interface (such as the transceiver 310 described in Figure 15).

In some embodiments, the network node 120, may comprise a series of modules configured to implement the functionalities of the network node described above. Referring to Figure 16, in some embodiments, the network node 120 can comprise a determination module 350 for receiving a context release associated with an IAB-node and determining various parameters/properties associated with the IAB-node; a handover module 360 for initiating a handover/release of UEs and/or nodes being served by the IAB-node; and a release module 370 for releasing at least one of a context and/or a connection associated with the IAB-node.

It will be appreciated that the various modules may be implemented as combination of hardware and software, for instance, the processor, memory and transceiver(s) of network node 120 shown in Figure 15. Some embodiments may also include additional modules to support additional and/or optional functionalities.

Turning now to Figure 17, some network nodes (e.g. radio access nodes 120, core network nodes 130, IAB nodes, etc.) in the wireless communication network 100 may be partially or even entirely virtualized. As a virtualized entity, some or all the functions of a given network node are implemented as one or more virtual network functions (VNFs) running in virtual machines (VMs) hosted on a typically generic processing node 400 (or server).

Processing node 400 generally comprises a hardware infrastructure 402 supporting a virtualization environment 404.

The hardware infrastructure 402 generally comprises processing circuitry 406, a memory 408, and communication interface(s) 410.

Processing circuitry 406 typically provides overall control of the hardware infrastructure 402 of the virtualized processing node 400. Hence, processing circuitry 406 is generally responsible for the various functions of the hardware infrastructure 402 either directly or indirectly via one or more other components of the processing node 400 (e.g. sending or receiving messages via the communication interface 410). The processing circuitry 406 is also responsible for enabling, supporting and managing the virtualization environment 404 in which the various VNFs are run. The processing circuitry 406 may include any suitable combination of hardware to enable the hardware infrastructure 402 of the virtualized processing node 400 to perform its functions.

In some embodiments, the processing circuitry 406 may comprise at least one processor 412 and at least one memory 414. Examples of processor 412 include, but are not limited to, a central processing unit (CPU), a graphical processing unit (GPU), and other forms of processing unit. Examples of memory 414 include, but are not limited to, Random Access Memory (RAM) and Read Only Memory (ROM). When processing circuitry 406 comprises memory 414, memory 414 is generally configured to store instructions or codes executable by processor 412, and possibly operational data. Processor 412 is then configured to execute the stored instructions and possibly create, transform, or otherwise manipulate data to enable the hardware infrastructure 402 of the virtualized processing node 400 to perform its functions.

Additionally, or alternatively, in some embodiments, the processing circuity 406 may comprise, or further comprise, one or more application-specific integrated circuits (ASICs), one or more complex programmable logic device (CPLDs), one or more field-programmable gate arrays (FPGAs), or other forms of application-specific and/or programmable circuitry. When the processing circuitry 406 comprises application-specific and/or programmable circuitry (e.g., ASICs, FPGAs), the hardware infrastructure 402 of the virtualized processing node 400 may perform its functions without the need for instructions or codes as the necessary instructions may already be hardwired or preprogrammed into processing circuitry 406. Understandably, processing circuitry 406 may comprise a combination of processor(s) 412, memory(ies) 414, and other application-specific and/or programmable circuitry.

The communication interface(s) 410 enable the virtualized processing node 400 to send messages to and receive messages from other network nodes (e.g., radio network nodes, other core network nodes, servers, etc.). In that sense, the communication interface 410 generally comprises the necessary hardware and software to process messages received from the processing circuitry 406 to be sent by the virtualized processing node 400 into a format appropriate for the underlying transport network and, conversely, to process messages received from other network nodes over the underlying transport network into a format appropriate for the processing circuitry 406. Hence, communication interface 410 may comprise appropriate hardware, such as transport network interface(s) 416 (e.g., port, modem, network interface card, etc.), and software, including protocol conversion and data processing capabilities, to communicate with other network nodes.

The virtualization environment 404 is enabled by instructions or codes stored on memory 408 and/or memory 414. The virtualization environment 404 generally comprises a virtualization layer 418 (also referred to as a hypervisor), at least one virtual machine 420, and at least one VNF 422. The functions of the processing node 400 may be implemented by one or more VNFs 422.

Some embodiments may be represented as a software product stored in a machine-readable medium (also referred to as a computer-readable medium, a processor-readable medium, or a computer usable medium having a computer readable program code embodied therein). The machine-readable medium may be any suitable tangible medium including a magnetic, optical, or electrical storage medium including a diskette, compact disk read only memory (CD-ROM), digital versatile disc read only memory (DVD-ROM) memory device (volatile or non-volatile), or similar storage mechanism. The machine-readable medium may contain various sets of instructions, code sequences, configuration information, or other data, which, when executed, cause processing circuitry (e.g. a processor) to perform steps in a method according to one or more embodiments. Those of ordinary skill in the art will appreciate that other instructions and operations necessary to implement the described embodiments may also be stored on the machine-readable medium. Software running from the machine-readable medium may interface with circuitry to perform the described tasks.

### GLOSSARY

The present description may comprise one or more of the following abbreviation:
- 3GPP: Third Generation Partnership Project
- ACK: Acknowledgement
- AP: Access point
- ARQ: Automatic Repeat Request
- BS: Base Station
- BSC: Base station controller
- BSR: Buffer Status Report
- BTS: Base transceiver station
- CA: Carrier Aggregation
- CC: Component carrier
- CCCH SDU: Common Control Channel SDU
- CG: Cell group
- CGI: Cell Global Identifier
- CN: Core network
- CQI: Channel Quality information
- CSI: Channel State Information
- CU: Central Unit
- DAS: Distributed antenna system
- DC: Dual connectivity
- DCCH: Dedicated Control Channel
- DCI: Downlink Control Information
- DL: Downlink
- DMRS: Demodulation Reference Signal
- DU: Distributed Unit
- eMBB: Enhanced Mobile Broadband
- eNB: E-UTRAN NodeB or evolved NodeB
- ePDCCH: enhanced Physical Downlink Control Channel
- E-SMLC: evolved Serving Mobile Location Center
- E-UTRA: Evolved UTRA
- E-UTRAN: Evolved UTRAN
- FDM: Frequency Division Multiplexing
- HARQ: Hybrid Automatic Repeat Request
- HO: Handover
- IAB: Integrated Access Backhaul
- IoT: Internet of Things
- LTE: Long-Term Evolution
- M2M: Machine to Machine
- MAC: Medium Access Control
- MBMS: Multimedia Broadcast Multicast Services
- MCG: Master cell group
- MDT: Minimization of Drive Tests
- MeNB: Master eNode B
- MME: Mobility Management Entity
- MSC: Mobile Switching Center
- MSR: Multi-standard Radio
- MTC: Machine Type Communication
- NACK: Negative acknowledgement
- NDI: Next Data Indicator
- NR: New Radio
- O&M: Operation and Maintenance
- OFDM: Orthogonal Frequency Division Multiplexing
- OFDMA: Orthogonal Frequency Division Multiple Access
- OSS: Operations Support System
- PCC: Primary Component Carrier
- P-CCPCH: Primary Common Control Physical Channel
- PCell: Primary Cell
- PCG: Primary Cell Group
- PCH: Paging Channel
- PCI: Physical Cell Identity
- PDCCH: Physical Downlink Control Channel
- PDCP: Packet Data Convergence Protocol
- PDSCH: Physical Downlink Shared Channel
- PDU: Protocol Data Unit
- PGW: Packet Gateway
- PHICH: Physical HARQ indication channel
- PMI: Precoder Matrix Indicator
- ProSe: Proximity Service
- PSC: Primary serving cell
- PSCell: Primary SCell
- PUCCH: Physical Uplink Control Channel
- PUSCH: Physical Uplink Shared Channel
- RAT: Radio Access Technology
- RB: Resource Block
- RF: Radio Frequency
- RLC: Radio Link Control
- RLM: Radio Link Management
- RNC: Radio Network Controller
- RRC: Radio Resource Control
- RRH: Remote Radio Head
- RRM: Radio Resource Management
- RRU: Remote Radio Unit
- RSRP: Reference Signal Received Power
- RSRQ: Reference Signal Received Quality
- RSSI: Received Signal Strength Indicator
- RSTD: Reference Signal Time Difference
- RTT: Round Trip Time
- SCC: Secondary Component Carrier
- SCell: Secondary Cell
- SCG: Secondary Cell Group
- SCH: Synchronization Channel
- SDU: Service Data Unit
- SeNB: Secondary eNodeB
- SGW: Serving Gateway
- SI: System Information
- SIB: System Information Block
- SINR: Signal to Interference and Noise Ratio
- SNR: Signal Noise Ratio
- SPS: Semi-persistent Scheduling
- SON: Self-organizing Network
- SR: Scheduling Request
- SRS: Sounding Reference Signal
- SSC: Secondary Serving Cell
- TTI: Transmission Time Interval
- Tx: Transmitter
- UE: User Equipment
- UL: Uplink
- URLLC: Ultra-Reliable Low Latency Communication
- UTRA: Universal Terrestrial Radio Access
- UTRAN: Universal Terrestrial Radio Access Network
- V2V: Vehicle-to-vehicle
- V2X: Vehicle-to-everything
- WLAN: Wireless Local Area Network

## Claims

1. A method performed by a first Integrated Access Backhaul, IAB, -donor central unit, CU (52), the first IAB-donor CU (52) providing wireless backhauling functionality to one or more IAB-nodes (60A-E), wherein each IAB-node (60A-E) includes a mobile termination, MT, function and a distributed unit, DU, function, the method comprising:
receiving (200) a MT context release associated with an IAB-node MT function, wherein the IAB-node MT function belongs to an IAB-node that is served by the first IAB-donor CU;
responsive to the receiving (200) the MT context release, identifying (210) a DU function for the IAB-node;
initiating (240) a release of an F1 interface resource associated with the IAB-node DU function; and
releasing (250) a radio resource control, RRC, connection associated with the IAB-node MT function.

2. The method of claim 1, further comprising, determining if at least one user equipment, UE, or child IAB-node is served by the IAB-node DU function or
further comprising, determining that the IAB-node DU function is served by a second IAB-donor CU.

3. The method of claim 2, further comprising, responsive to determining that the UE is served by the IAB-node DU function, initiating a handover or release of the UE.

4. The method of claim 3, wherein initiating the handover or release of the UE includes transmitting a Xn handover request message to the second IAB-donor CU or
wherein initiating the handover or release of the UE includes transmitting a RRC release message to the second IAB-donor CU.

5. The method of any one of claims 2 to 4, further comprising, responsive to determining that the child IAB-node is served by the IAB-node DU function, initiating a handover or release of the child IAB-node.

6. The method of claim 5, wherein initiating the handover or release of the child IAB-node includes transmitting a Xn handover request message to the second IAB-donor CU or
wherein initiating the handover or release of the child IAB-node includes transmitting a RRC release message to the second IAB-donor CU.

7. The method of any one of claims 1 to 6, wherein initiating the release of the F1 interface resource includes releasing a non-UE associated context associated with the IAB-node DU function and/or
wherein initiating the release of the F1 interface resource includes transmitting a message to the second IAB-donor CU.

8. The method of any one of claims 1 to 7, further comprising, transmitting a UE/MT context release message to at least one parent IAB-node of the IAB-node.

9. A first Integrated Access Backhaul, IAB, -donor central unit, CU (52), for providing wireless backhauling functionality to one or more IAB-nodes (60A-E), wherein each IAB-node (60A-E) includes a mobile termination, MT, function and a distributed unit, DU, function, the first IAB-donor CU (52) comprising a radio interface and processing circuitry configured to:
receive a MT context release associated with an IAB-node MT function, wherein the IAB-node MT function belongs to an IAB-node that is served by the first IAB-donor CU;
responsive to the receiving the MT context release, identify a DU function for the IAB-node;
initiate a release of an F1 interface resource associated with the IAB-node DU function; and
release a radio resource control, RRC, connection associated with the IAB-node MT function.

10. The first IAB-donor CU (52) of claim 9, further configured to determine if at least one user equipment, UE, or child IAB-node is served by the IAB-node DU function or
further configured to determine that the IAB-node DU function is served by a second IAB-donor CU.

11. The first IAB-donor CU (52) of claim 10, further configured to, responsive to determining that the UE is served by the IAB-node DU function, initiate a handover or release of the UE.

12. The first IAB-donor CU (52) of claim 11, wherein initiating the handover or release of the UE includes transmitting a Xn handover request message to the second IAB-donor CU or
wherein initiating the handover or release of the UE includes transmitting a RRC release message to the second IAB-donor CU.

13. The first IAB-donor CU (52) of any one of claims 10 to 12, further configured to, responsive to determining that the child IAB-node is served by the IAB-node DU function, initiate a handover or release of the child IAB-node.

14. The first IAB-donor CU (52) of any one of claims 9 to 13, wherein initiating the release of the F1 interface resource includes releasing a non-UE associated context associated with the IAB-node DU function and/or
wherein initiating the release of the F1 interface resource includes transmitting a message to the second IAB-donor CU.

15. The first IAB-donor CU (52) of any one of claims 9 to 14, further comprising, transmitting a UE/MT context release message to at least one parent IAB-node of the IAB-node.

## Patentansprüche

1. Verfahren, das von einer ersten zentralen Integrated Access Backhaul-,IAB-,Gebereinheit, IAB-Geber-CU, (52) durchgeführt wird, wobei die erste IAB-Geber-CU (52) Drahtlos-Backhauling-Funktionalität für einen oder mehrere IAB-Knoten (60A-E) bereitstellt, wobei jeder IAB-Knoten (60A-E) eine Mobilfunkabschlussfunktion, MT-Funktion, und eine Funktion einer verteilten Einheit, DU, umfasst, wobei das Verfahren Folgendes umfasst:
Empfangen (200) einer MT-Kontextfreigabe, die mit einer IAB-Knoten-MT-Funktion assoziiert ist, wobei die IAB-Knoten-MT-Funktion zu einem IAB-Knoten gehört, der von der ersten IAB-Geber-CU bedient wird;
in Reaktion auf das Empfangen (200) der MT-Kontextfreigabe Identifizieren (210) einer DU-Funktion für den IAB-Knoten;
Initiieren (240) einer Freigabe einer F1-Schnittstellenressource, die mit der IAB-Knoten-DU-Funktion assoziiert ist; und
Freigeben (250) einer Funkressourcensteuerungsverbindung, RRC-Verbindung, die mit der IAB-Knoten-MT-Funktion assoziiert ist.

2. Verfahren nach Anspruch 1, ferner umfassend Bestimmen, ob mindestens eine Benutzereinrichtung, UE, oder ein untergeordneter IAB-Knoten von der IAB-Knoten-DU-Funktion bedient wird, oder
ferner umfassend Bestimmen, dass die IAB-Knoten-DU-Funktion von einer zweiten IAB-Geber-CU bedient wird.

3. Verfahren nach Anspruch 2, ferner umfassend Initiieren einer Übergabe oder Freigabe der UE in Reaktion auf das Bestimmen, dass die UE von der IAB-Knoten-DU-Funktion bedient wird.

4. Verfahren nach Anspruch 3, wobei das Initiieren der Übergabe oder Freigabe der UE Senden einer Xn-Übergabeanforderungsnachricht an die zweite IAB-Geber-CU umfasst oder
wobei das Initiieren der Übergabe oder Freigabe der UE Senden einer RRC-Freigabenachricht an die zweite IAB-Geber-CU umfasst.

5. Verfahren nach einem der Ansprüche 2 bis 4, ferner umfassend Initiieren einer Übergabe oder Freigabe des untergeordneten IAB-Knotens in Reaktion auf das Bestimmen, dass der untergeordnete IAB-Knoten von der IAB-Knoten-DU-Funktion bedient wird.

6. Verfahren nach Anspruch 5, wobei das Initiieren der Übergabe oder Freigabe des untergeordneten IAB-Knotens Senden einer Xn-Übergabeanforderungsnachricht an die zweite IAB-Geber-CU umfasst oder
wobei das Initiieren der Übergabe oder Freigabe des untergeordneten IAB-Knotens Senden einer RRC-Freigabenachricht an die zweite IAB-Geber-CU umfasst.

7. Verfahren nach einem der Ansprüche 1 bis 6, wobei das Initiieren der Freigabe der F1-Schnittstellenressource Freigeben eines nicht mit der UE assoziierten Kontexts umfasst, der mit der IAB-Knoten-DU-Funktion assoziiert ist, und/oder
wobei das Initiieren der Freigabe der F1-Schnittstellenressource Senden einer Nachricht an die zweite IAB-Geber-CU umfasst.

8. Verfahren nach einem der Ansprüche 1 bis 7, ferner umfassend Senden einer UE/MT-Kontextfreigabenachricht an mindestens einen übergeordneten IAB-Knoten des IAB-Knotens.

9. Erste zentrale Integrated Access Backhaul-,IAB- ,Gebereinheit, IAB-Geber-CU, (52) zum Bereitstellen von Drahtlos-Backhauling-Funktionalität für einen oder mehrere IAB-Knoten (60A-E), wobei jeder IAB-Knoten (60A-E) eine Mobilfunkabschlussfunktion, MT-Funktion, und eine Funktion einer verteilten Einheit, DU, umfasst, wobei die erste IAB-Geber-CU (52) eine Funkschnittstelle und Verarbeitungsschaltungsanordnung umfasst, die zu Folgendem ausgelegt ist:
Empfangen einer MT-Kontextfreigabe, die mit einer IAB-Knoten-MT-Funktion assoziiert ist, wobei die IAB-Knoten-MT-Funktion zu einem IAB-Knoten gehört, der von der ersten IAB-Geber-CU bedient wird;
in Reaktion auf das Empfangen der MT-Kontextfreigabe Identifizieren einer DU-Funktion für den IAB-Knoten;
Initiieren einer Freigabe einer F1-Schnittstellenressource, die mit der IAB-Knoten-DU-Funktion assoziiert ist; und
Freigeben einer Funkressourcensteuerungsverbindung, RRC-Verbindung, die mit der IAB-Knoten-MT-Funktion assoziiert ist.

10. Erste IAB-Geber-CU (52) nach Anspruch 9, ferner ausgelegt zum Bestimmen, ob mindestens eine Benutzereinrichtung, UE, oder ein untergeordneter IAB-Knoten von der IAB-Knoten-DU-Funktion bedient wird, oder
ferner ausgelegt zum Bestimmen, dass die IAB-Knoten-DU-Funktion von einer zweiten IAB-Geber-CU bedient wird.

11. Erste IAB-Geber-CU (52) nach Anspruch 10, ferner ausgelegt zum Initiieren einer Übergabe oder Freigabe der UE in Reaktion auf das Bestimmen, dass die UE von der IAB-Knoten-DU-Funktion bedient wird.

12. Erste IAB-Geber-CU (52) nach Anspruch 11, wobei das Initiieren der Übergabe oder Freigabe der UE Senden einer Xn-Übergabeanforderungsnachricht an die zweite IAB-Geber-CU umfasst oder
wobei das Initiieren der Übergabe oder Freigabe der UE Senden einer RRC-Freigabenachricht an die zweite IAB-Geber-CU umfasst.

13. Erste IAB-Geber-CU (52) nach einem der Ansprüche 10 bis 12, ferner ausgelegt zum Initiieren einer Übergabe oder Freigabe des untergeordneten IAB-Knotens in Reaktion auf das Bestimmen, dass der untergeordnete IAB-Knoten von der IAB-Knoten-DU-Funktion bedient wird.

14. Erste IAB-Geber-CU (52) nach einem der Ansprüche 9 bis 13, wobei das Initiieren der Freigabe der F1-Schnittstellenressource Freigeben eines nicht mit der UE assoziierten Kontexts umfasst, der mit der IAB-Knoten-DU-Funktion assoziiert ist, und/oder wobei das Initiieren der Freigabe der F1-Schnittstellenressource Senden einer Nachricht an die zweite IAB-Geber-CU umfasst.

15. Erste IAB-Geber-CU (52) nach einem der Ansprüche 9 bis 14, ferner umfassend Senden einer UE/MT-Kontextfreigabenachricht an mindestens einen übergeordneten IAB-Knoten des IAB-Knotens.

## Revendications

1. Procédé réalisé par une première unité centrale, CU, donneuse de liaison terrestre d'accès intégré, IAB, (52), la première CU donneuse d'IAB (52) fournissant une fonctionnalité de liaison terrestre sans fil à un ou plusieurs nœuds IAB (60A-E), dans lequel chaque nœud IAB (60A-E) inclut une fonction de terminaison mobile, MT, et une fonction d'unité distribuée, DU, le procédé comprenant :
la réception (200) d'une libération de contexte MT associée à une fonction MT de nœud IAB, dans lequel la fonction MT de nœud IAB appartient à un nœud IAB qui est desservi par la première CU donneuse d'IAB ;
en réponse à la réception (200) de la libération de contexte MT, l'identification (210) d'une fonction DU pour le nœud IAB ;
l'initiation (240) d'une libération d'une ressource d'interface F1 associée à la fonction DU de nœud IAB ; et
la libération (250) d'une connexion de commande de ressources radio, RRC, associée à la fonction MT de nœud IAB.

2. Procédé selon la revendication 1, comprenant en outre la détermination si au moins un équipement utilisateur, UE, ou un nœud IAB enfant est desservi par la fonction DU de nœud IAB, ou
comprenant en outre la détermination que la fonction DU de nœud IAB est desservie par une deuxième CU donneuse d'IAB.

3. Procédé selon la revendication 2, comprenant en outre, en réponse à la détermination que l'UE est desservi par la fonction DU de nœud IAB, l'initiation d'un transfert intercellulaire ou d'une libération de l'UE.

4. Procédé selon la revendication 3, dans lequel l'initiation du transfert intercellulaire ou de la libération de l'UE inclut la transmission d'un message de demande de transfert intercellulaire Xn à la deuxième CU donneuse d'IAB, ou
dans lequel l'initiation du transfert intercellulaire ou de la libération de l'UE inclut la transmission d'un message de libération RRC à la deuxième CU donneuse d'IAB.

5. Procédé selon l'une quelconque des revendications 2 à 4, comprenant en outre, en réponse à la détermination que le nœud IAB enfant est desservi par la fonction DU de nœud IAB, l'initiation d'un transfert intercellulaire ou d'une libération du nœud IAB enfant.

6. Procédé selon la revendication 5, dans lequel l'initiation du transfert intercellulaire ou de la libération du nœud IAB enfant inclut la transmission d'un message de demande de transfert intercellulaire Xn à la deuxième CU donneuse d'IAB, ou
dans lequel l'initiation du transfert intercellulaire ou de la libération du nœud IAB enfant inclut la transmission d'un message de libération RRC à la deuxième CU donneuse d'IAB.

7. Procédé selon l'une quelconque des revendications 1 à 6, dans lequel l'initiation de la libération de la ressource d'interface F1 inclut la libération d'un contexte non associé à l'UE qui est associé à la fonction DU de nœud IAB, et/ou
dans lequel l'initiation de la libération de la ressource d'interface F1 inclut la transmission d'un message à la deuxième CU donneuse d'IAB.

8. Procédé selon l'une quelconque des revendications 1 à 7, comprenant en outre la transmission d'un message de libération de contexte d'UE/MT à au moins un nœud IAB parent du nœud IAB.

9. Première unité centrale, CU, donneuse de liaison terrestre d'accès intégré, IAB, (52), pour fournir une fonctionnalité de liaison terrestre sans fil à un ou plusieurs nœuds IAB (60A-E), dans laquelle chaque nœud IAB (60A-E) inclut une fonction de terminaison mobile, MT, et une fonction d'unité distribuée, DU, la première CU donneuse d'IAB (52) comprenant une interface radio et une circuiterie de traitement configurée pour :
recevoir une libération de contexte MT associée à une fonction MT de nœud IAB, dans laquelle la fonction MT de nœud IAB appartient à un nœud IAB qui est desservi par la première CU donneuse d'IAB ;
en réponse à la réception de la libération de contexte MT, identifier une fonction DU pour le nœud IAB ;
initier une libération d'une ressource d'interface F1 associée à la fonction DU de nœud IAB ; et
libérer une connexion de commande de ressources radio, RRC, associée à la fonction MT de nœud IAB.

10. Première CU donneuse d'IAB (52) selon la revendication 9, configurée en outre pour déterminer si au moins un équipement utilisateur, UE, ou un nœud IAB enfant est desservi par la fonction DU de nœud IAB, ou configurée en outre pour déterminer que la fonction DU de nœud IAB est desservie par une deuxième CU donneuse d'IAB.

11. Première CU donneuse d'IAB (52) selon la revendication 10, configurée en outre pour, en réponse à la détermination que l'UE est desservi par la fonction DU de nœud IAB, initier un transfert intercellulaire ou une libération de l'UE.

12. Première CU donneuse d'IAB (52) selon la revendication 11, dans laquelle l'initiation du transfert intercellulaire ou de la libération de l'UE inclut la transmission d'un message de demande de transfert intercellulaire Xn à la deuxième CU donneuse d'IAB, ou
dans laquelle l'initiation du transfert intercellulaire ou de la libération de l'UE inclut la transmission d'un message de libération RRC à la deuxième CU donneuse d'IAB.

13. Première CU donneuse d'IAB (52) selon l'une quelconque des revendications 10 à 12, configurée en outre pour, en réponse à la détermination que le nœud IAB enfant est desservi par la fonction DU de nœud IAB, initier un transfert intercellulaire ou une libération du nœud IAB enfant.

14. Première CU donneuse d'IAB (52) selon l'une quelconque des revendications 9 à 13, dans laquelle l'initiation de la libération de la ressource d'interface F1 inclut la libération d'un contexte non associé à l'UE qui est associé à la fonction DU de nœud IAB, et/ou dans laquelle l'initiation de la libération de la ressource d'interface F1 inclut la transmission d'un message à la deuxième CU donneuse d'IAB.

15. Première CU donneuse d'IAB (52) selon l'une quelconque des revendications 9 à 14, comprenant en outre la transmission d'un message de libération de contexte d'UE/MT à au moins un nœud IAB parent du nœud IAB.
